(19) Europäisches Patentamt
European Patent Office
Office européen des brevets

(11) **EP 4 113 421 A2**

(12) **EUROPEAN PATENT APPLICATION**

(43) Date of publication:
**04.01.2023 Bulletin 2023/01**

(51) International Patent Classification (IPC):
**G06Q 40/06** *(2012.01)*

(21) Application number: **22201883.0**

(52) Cooperative Patent Classification (CPC):
**G06Q 40/06**

(22) Date of filing: **17.10.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2021 CN 202111496904**

(71) Applicant: **BEIJING BAIDU NETCOM SCIENCE AND TECHNOLOGY CO. LTD.**
**100085 Beijing (CN)**

(72) Inventors:
• **XU, Jianming**
  **Beijing, 100085 (CN)**
• **WEI, Chengdong**
  **Beijing, 100085 (CN)**

(74) Representative: **Nederlandsch Octrooibureau**
**P.O. Box 29720**
**2502 LS The Hague (NL)**

(54) **METHOD AND APPARATUS FOR PERFORMING VALUATION ON RESOURCE, DEVICE AND STORAGE MEDIUM**

(57)    The present disclosure provides a method and apparatus for performing a valuation on a resource, a device, a storage medium and a program product, and particularly relates to the field of smart finance technology. A specific implementation comprises: acquiring quotation data of a resource; constructing a style index factor of the resource based on the quotation data; calculating an exposure weight of the style index factor based on the style index factor; and generating a basic valuation of the resource based on the exposure weight of the style index factor and the quotation data. This implementation improves the precision of the valuation.

200

201 Acquiring quotation data of a resource

202 Constructing a style index factor of the resource based on the quotation data

203 Calculating an exposure weight of the style index factor based on the style index factor

204 Generating a basic valuation of the resource based on the exposure weight of the style index factor and the quotation data

205 Calculating a mean deviation between a historical valuation and historical net value of the resource in a preset time period

206 Revising the basic valuation of the resource based on the mean deviation to obtain a target valuation of the resource

Fig. 2

EP 4 113 421 A2

**Description**

TECHNICAL FIELD

The present disclosure relates to the field of Internet technology, and particularly to the field of smart finance technology.

BACKGROUND

The so-called net value of a resource (e.g., fund) refers to the net value of the resource per unit, which is the real price at which the resource is usually bought and sold. The so-called valuation of the resource is a rough estimation or calculation for the net value of the resource. The valuation of the resource is published earlier than the net value of the resource and is an important reference for investors to purchase the resource. Therefore, the valuation of the resource needs to ensure the accuracy and timeliness, otherwise there is a large deviation in the valuation on the resource, which may cause the investors to make misjudgements and bring losses to the investors.

SUMMARY

Embodiments of the present disclosure propose a method and apparatus for performing a valuation on a resource, a device, a storage medium and a program product.

In a first aspect, embodiments of the present disclosure provide a method for performing a valuation on a resource, comprising: acquiring quotation data of a resource; constructing a style index factor of the resource based on the quotation data; calculating an exposure weight of the style index factor based on the style index factor; and generating a basic valuation of the resource based on the exposure weight of the style index factor and the quotation data.

In a second aspect, embodiments of the present disclosure provide an apparatus for performing a valuation on a resource, comprising: an acquiring module, configured to acquire quotation data of a resource; a constructing module, configured to construct a style index factor of the resource based on the quotation data; a first calculating module, configured to calculate an exposure weight of the style index factor based on the style index factor; and a generating module, configured to generate a basic valuation of the resource based on the exposure weight of the style index factor and the quotation data.

In a third aspect, embodiments of the present disclosure provide an electronic device, comprising: one or more processors; and a memory, storing one or more programs, wherein the one or more programs, when executed by the one or more processors, cause the one or more processors to implement the method for performing a valuation on a resource provided by the first aspect.

In a fourth aspect, embodiments of the present disclosure provide a computer-readable medium, storing a computer program thereon, wherein the program, when executed by a processor, causes the processor to implement the method for performing a valuation on a resource provided by the first aspect.

In a fifth aspect, an embodiment of the present disclosure provides a computer program product, comprising a computer program, wherein the computer program, when executed by a processor, implements the method for performing a valuation on a resource provided by the first aspect.

According to the method for performing a valuation on a resource provided in the embodiments of the present disclosure, the resource valuation data is derived from the quotation data of the resource, and belongs to the information published every day, thereby improving the timeliness of the valuation of the resource. In addition, the quotation data of the resource covers almost all the information for operations on the resource, and is closer to the real situation of the resource, thereby improving the precision of the valuation.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

After reading detailed descriptions for non-limiting embodiments given with reference to the following accompanying drawings, other features, objectives and advantages of the present disclosure will be more apparent. The accompanying drawings are used for a better understanding of the scheme, and do not constitute a limitation to the present disclosure. Here:

Fig. 1 is a flowchart of an embodiment of a method for performing a valuation on a resource according to the present disclosure;

Fig. 2 is a flowchart of another embodiment of the method for performing a valuation on a resource according to the present disclosure;

Fig. 3 is a flowchart of another embodiment of the method for performing a valuation on a resource according to the present disclosure;

Fig. 4 is a diagram of a scenario in which a method for performing a valuation on a resource according to an embodiment of the present disclosure can be applied;

Fig. 5 is a schematic structural diagram of an embodiment of an apparatus for performing a valuation on a resource according to the present disclosure; and

Fig. 6 is a block diagram of an electronic device used to implement the method for performing a valuation on a resource according to the embodiments of the present disclosure.

DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

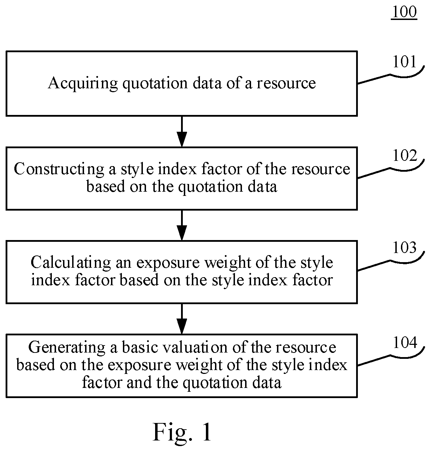

Fig. 1 illustrates a flow 100 of an embodiment of a method for performing a valuation on a resource according to the present disclosure. The method for performing a valuation on a resource includes the following steps:

Step 101, acquiring quotation data of a resource.

In this embodiment, an executing body of the method for performing a valuation on a resource may acquire the quotation data of the resource.

Here, the resource may be refer to funding having a specific purpose and use, for example, a fund. The quotation data of the resource may include historical quotation data and real-time quotation data. The historical quotation data may include, but not limited to, a historical net value of the resource, historical closing prices of various style indices of the resource, and the like. A style index may refer to an index that reflects a specific style or investment feature on the market, including, but not limited to, a small-cap value index, a small-cap growth index, a mid-cap value index, a mid-cap growth index, a large-cap value index, a large-cap growth index, a ChinaBond composite index, and the like. The real-time quotation data may be the real-time rises and falls of various style indices of the resource, including, but not limited to, the real-time rise and fall of the small-cap value index, the real-time rise and fall of the small-cap growth index, the real-time rise and fall of the mid-cap value index, the real-time rise and fall of the mid-cap growth index, the real-time rise and fall of the large-cap value index, the real-time rise and fall of the large-cap growth index, the real-time rise and fall of the ChinaBond composite index, and the like.

Here, the basic data of the resource may be acquired first, and then the specific resource is determined based on the basic data, and accordingly, the historical quotation data and real-time quotation data of the resource are acquired. Here, the basic data of the resource may be used to uniquely identify the resource, the basic data including, but not limited to, a resource code, a resource name, and the like.

Step 102, constructing a style index factor of the resource based on the quotation data.

In this embodiment, the above executing body may construct the style index factor of the resource based on the quotation data.

Here, the style index factor may be a factor that has a degree of interpretation on a style index value on the cross section, including, but not limited to, a Beta coefficient, an accounting price, a rate of return, a growth rate, a leverage ratio, liquidity, momentum, a non-linear scale, a residual volatility, a magnitude, and the like. In some embodiments, the style index factor of the resource may be a historical rate of return or historical growth rate of the style index. The historical rate of return or historical growth rate of the style index can be calculated based on the historical closing price the style index. Similarly, the historical rate of return or historical growth rate of the resource can be calculated based on the historical net value of the resource. Generally, according to the sequence of closing prices of the style index in a historical time cycle, the sequence of rates of return or the sequence of growth rates of the style index in the historical time cycle can be calculated. According to the sequence of net values of the resource in the historical time cycle, the sequence of rates of return or the sequence of growth rates of the resource in the historical time cycle can be calculated. Here, the time cycle may be a cycle of any length of time, for example, one day, three days, etc.

Step 103, calculating an exposure weight of the style index factor based on the style index factor.

In this embodiment, the above executing body may calculate the exposure weight of the style index factor based on the style index factor.

Here, the exposure weight of the style index factor may be used to represent a degree of influence of the style index factor on the basic valuation of the resource. Generally, the higher the degree of influence of the style index factor on the basic valuation of the resource is, the larger the value of the exposure weight corresponding to the style index factor is. In some embodiments, a person skilled in the art may determine the degrees of influence of various style index factors of the resource on a target valuation according to experience, and then determine their corresponding exposure weights.

Step 104, generating a basic valuation of the resource based on the exposure weight of the style index factor and the quotation data.

In this embodiment, the above executing body may generate the basic valuation of the resource based on the exposure weight of the style index factor and the quotation data.

Specifically, the basic valuation of the resource may be generated based on the exposure weight of the style index factor and the real-time quotation data. Since the real-time quotation data refers to the real-time rises and falls of various style indices of the resource, the degree of influence of the real-time rise and fall of the style index on the basic valuation of the resource can be calculated according to the exposure weight of the style index factor, and then the basic valuation of the resource is obtained.

According to the method for performing a valuation on a resource provided in the embodiment of the present disclosure, the resource valuation data is derived from the quotation data of the resource, and belongs to the information published every day, thereby improving the timeliness of the valuation of the resource. In addition, the quotation data of the resource covers almost all the information for operations on the resource, and is closer to the real situation of the resource, thereby improving the precision of the valuation. The method for performing a valuation on a resource provided in the embodiment of the present disclosure can be applied to application scenarios such as a resource product sales system and a portfolio management system. In the resource product sales system, the method can help investors to know the change of the net value of the resource in time and assist the investors to make an investment decision. In the portfolio management system, real-time monitoring on the net value of the resource can be implemented by performing a real-time valuation on the resource.

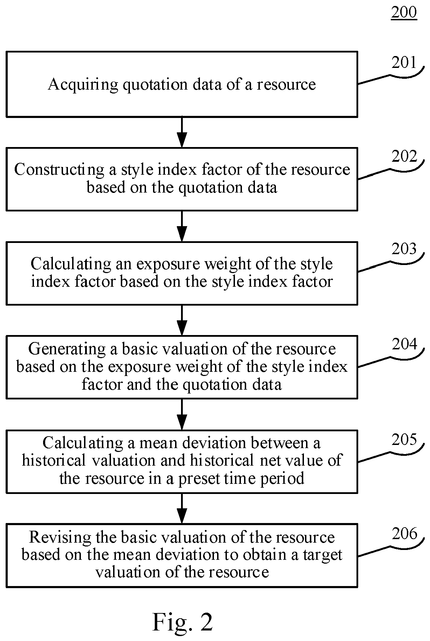

Further referring to Fig. 2, Fig. 2 illustrates a flow 200 of another embodiment of the method for performing a valuation on a resource according to the present disclosure. The method for performing a valuation on a resource includes the following steps:

Step 201, acquiring quotation data of a resource.

Step 202, constructing a style index factor of the resource based on the quotation data.

Step 203, calculating an exposure weight of the style index factor based on the style index factor.

Step 204, generating a basic valuation of the resource based on the exposure weight of the style index factor and the quotation data.

In this embodiment, the specific operations of steps 201-204 have been described in detail in steps 101-104 in the embodiment shown in Fig. 1, and thus will not be repeatedly described here.

Step 205, calculating a mean deviation value between a historical valuation and historical net value of the resource in a historical time period.

In this embodiment, an executing body of the method for performing a valuation on a resource may calculate the mean deviation value between the historical valuation and historical net value of the resource in the historical time period.

In general, the deviation between the historical valuation and historical net value of the resource within each historical time cycle in the historical time period can be calculated, and then, the mean value of all deviations is calculated. Here, the length of the historical time period is determined by both the amount of the data and the degree of influence of the data. By setting the length of the historical time period, it is required not only to ensure that the amount of data is sufficient, but also to ensure that the data falling into the historical time period has a certain degree of influence. The longer the historical time period is, the more sufficient the amount of data is, but the lower the degree of influence of the data falling to an earlier historical time cycle in the historical time period is. Therefore, it is possible to determine a historical time period of a suitable length by combining the amount of the data and the degree influence of the data. In practice, the historical time period is typically 90 days.

Step 206, revising the basic valuation of the resource based on the mean deviation value to obtain a target valuation of the resource.

In this embodiment, the above executing body may revise the basic valuation of the resource based on the mean deviation value, to obtain the target valuation of the resource.

In general, the target valuation of the resource can be obtained through the following formula:

$$\text{Target valuation of resource} = \text{actual basic valuation of resource} + \text{mean (sum (deviation between the historical valuation and historical net value of the resource in the historical time period))}.$$

It can be seen from Fig. 2 that, as compared with the embodiment corresponding to Fig. 1, the step of revising the valuation is added in the flow 200 of the method for performing a valuation on a resource in this embodiment. Accordingly, in the scheme described in this embodiment, the basic valuation of the resource is revised based on the mean deviation value between the historical valuation and historical net value of the resource in the historical time period, thereby further improving the precision of the valuation.

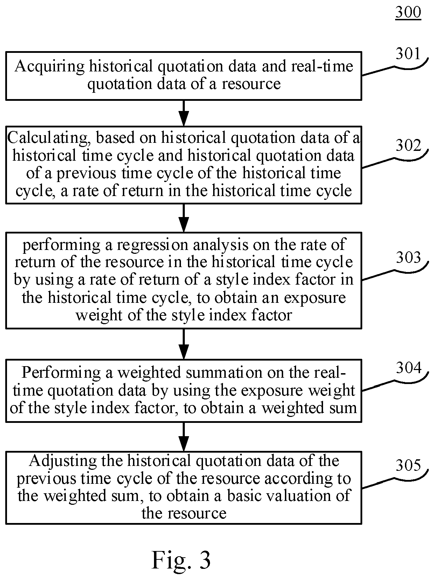

Further referring to Fig. 3, Fig. 3 illustrates a flow 300 of another embodiment of the method for performing a valuation on a resource according to the present disclosure. The method for performing a valuation on a resource includes the following steps:

Step 301, acquiring historical quotation data and real-time quotation data of a resource.

In this embodiment, an executing body of the method for performing a valuation on a resource may acquire the historical quotation data and real-time quotation data of the resource.

Here, the resource may be refer to funding having a specific purpose and use, for example, a fund. The historical quotation data of the resource may include, but not limited to, a historical net value of the resource, historical closing prices of various style indices of the resource, and the like. A style index may refer to an index that reflects a specific style or investment feature on the market, including, but not limited to, a small-cap value index, a small-cap growth index, a mid-cap value index, a mid-cap growth index, a large-cap value index, a large-cap growth index, a ChinaBond composite index, and the like. The real-time quotation data of the resource may be the real-time rises and falls of various style indices of the resource, including, but not limited to, the real-time rise and fall of the small-cap value index, the real-time rise and fall of the small-cap growth index, the real-time rise and fall of the mid-cap value index, the real-time rise and fall of the mid-cap growth index, the real-time rise and fall of the large-cap value index, the real-time rise and fall of the large-cap growth index, the real-time rise and fall of the ChinaBond composite index, and the like.

Here, the basic data of the resource may be acquired first, and then the specific resource is determined based on the basic data, and accordingly, the historical quotation data and real-time quotation data of the resource are acquired. Here, the basic data of the resource may be used to uniquely identify the resource, the basic data including, but not limited to, a resource code, a resource name, and the like.

Step 302, calculating, based on historical quotation data in a historical time cycle and historical quotation data in a previous time cycle of the historical time cycle, a rate of return in the historical time cycle.

In this embodiment, the above executing body may calculate the rate of return in the historical time cycle, based on the historical quotation data in the historical time cycle and the historical quotation data in the previous time cycle of the historical time cycle.

Here, a style index factor of the resource may be a historical rate of return of the style index. The historical rate of return of the style index can be calculated based on the historical closing price the style index. Similarly, the historical rate of return of the resource can be calculated based on the historical net value of the resource. Generally, according to the sequence of closing prices of the style index in the historical time cycle, the sequence of rates of return of the style index in the historical time cycle can be calculated. According to the sequence of net values of the resource in the historical time cycle, the sequence of rates of return of the resource in the historical time cycle can be calculated.

Here, the rate of return of the style index in the historical time cycle may be calculated through the following formulas:

the rate of return of the style index in the historical time cycle = (the historical closing price in the historical time cycle - the historical closing price in the previous time cycle of the historical time cycle)/the historical closing price in the previous time cycle of the historical time cycle; and

the rate of return of the resource in the historical time cycle = (the historical net value in the historical time cycle -

the historical net value in the previous time cycle of the historical time cycle)/the historical net value in the previous time cycle of the historical time cycle.

Step 303, performing a regression analysis on a rate of return of the resource in the historical time cycle by using a rate of return of a style index factor in the historical time cycle, to obtain an exposure weight of the style index factor.

In this embodiment, the above executing body may perform the regression analysis on the rate of return of the resource in the historical time cycle by using the rate of return of the style index factor in the historical time cycle, to obtain the exposure weight of the style index factor.

Here, the exposure weight of the style index factor may be used to represent a degree of influence of the style index factor on the basic valuation of the resource. Generally, the higher the degree of influence of the style index factor on the basic valuation of the resource is, the larger the value of the exposure weight corresponding to the style index factor is.

Here, the exposure weight of the style index factor may be calculated through the following formula:

the historical rate of return of the resource = the historical rate of return of the small-cap value index $*$ $w_1$ + the historical rate of return of the small-cap growth index $*$ $w_2$ + the historical rate of return of the mid-cap value index $*$ $w_3$ + the historical rate of return of the mid-cap growth index $*$ $w_4$ + the historical rate of return of the large-cap value index $*$ ws + the historical rate of return of the large-cap growth index $*$ $w_6$ + the historical rate of return of the ChinaBond composite index $*$ $w_7$.

Here, $w_1$, $w_2$, $w_3$, $w_4$, $w_5$, $w_6$ and $w_7$ are exposure weights of various style index factors of the resource. Since the exposure weights of the seven style index factors need to be calculated, the historical rates of return in at least seven historical time cycles need to be calculated and substituted into the above formula, thus obtaining the exposure weights of the seven style index factors. It should be noted that only seven style index factors are exemplified, and any number of style index factors may be used as desired.

Step 304, performing a weighted summation on the real-time quotation data by using the exposure weight of the style index factor, to obtain a weighted sum.

In this embodiment, the above executing body may perform the weighted summation on the real-time quotation data by using the exposure weight of the style index factor, to obtain the weighted sum.

Here, the weighted sum may be calculated through the following formula:

$$\text{the weighted sum} = (\text{the real-time rise and fall of the small-cap value index} * w_1 + \text{the real-time rise and fall of the small-cap growth index} * w_2 + \text{the real-time rise and fall of the mid-cap value index} * w_3 + \text{the real-time rise and fall of the mid-cap growth index} * w_4 + \text{the real-time rise and fall of the large-cap value index} * w_5 + \text{the real-time rise and fall of the large-cap growth index} * w_6 + \text{the real-time rise and fall of the ChinaBond composite index} * w_7.$$

step 305, adjusting the historical quotation data of the resource in the previous time cycle according to the weighted sum, to obtain a basic valuation of the resource.

In this embodiment, the above executing body may adjust the historical quotation data of the resource in the previous time cycle with the weighted sum as a ratio, to obtain the basic valuation of the resource.

Here, the basic valuation of the resource may be calculated through the following formula:

$$\text{the basic valuation of the resource} = \text{the historical net value of the resource in the previous time cycle} * (1 + \text{the weighted sum}).$$

It can be seen from Fig. 3 that, as compared with the embodiment corresponding to Fig. 1, the flow 300 of the method for performing a valuation on a resource in this embodiment emphasizes the steps of calculating the style index factor, the exposure weight of the style index factor, and the basic valuation of the resource. Accordingly, according to the scheme described in this embodiment, the style index factor, the exposure weight of the style index factor and the basic valuation of the resource can be quickly acquired.

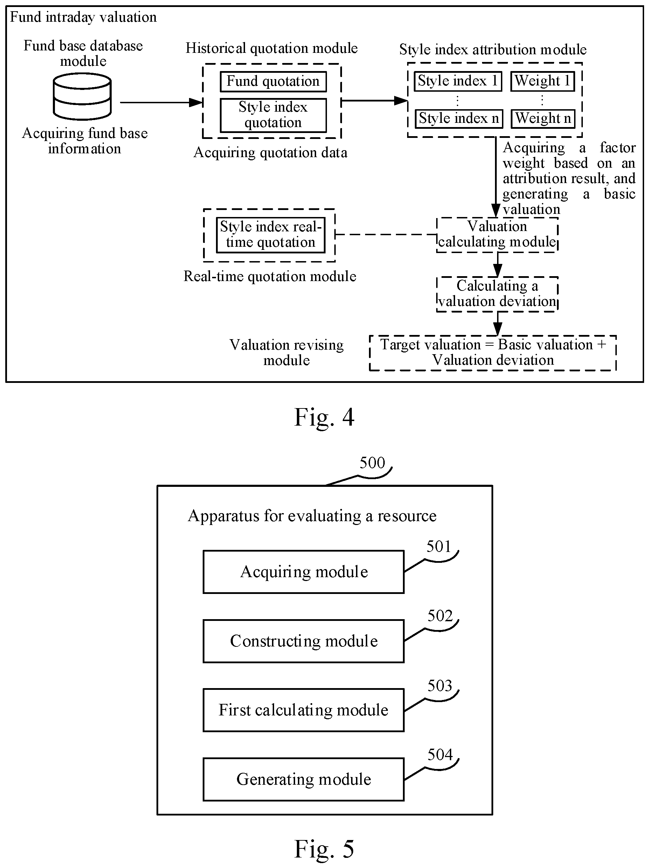

For ease of understanding, Fig. 4 is a diagram of a scenario in which a method for performing a valuation on a resource according to an embodiment of the present disclosure can be applied. As shown in Fig. 4, the resource in the scenario is a fund, and can be used for the intra-day valuation of the fund. Specifically, six basic modules are included: a fund base database module, a historical quotation module, a style index attribution module, a real-time quotation module, a valuation calculating module and a valuation revising module. Here, the fund base database module may be used to acquire the basic data of the fund. The historical quotation module may be used to acquire the quotation of the fund and the quotation of a style index. The style index attribution module may be used to acquire the weights 1 to n of style indices 1 to n. The real-time quotation module may acquire the real-time quotation of the style index. The valuation calculating module may obtain a factor weight according to an attribution result, to generate a basic valuation. The valuation revising module may calculate a valuation deviation for revising the basic valuation, to obtain a target valuation.

Further referring to Fig. 5, as an implementation of the method shown in the above drawings, the present disclosure provides an embodiment of an apparatus for performing a valuation on a resource. The embodiment of the apparatus corresponds to the embodiment of the method shown in Fig. 1. The apparatus may be applied in various electronic devices.

As shown in Fig. 5, the apparatus 500 for performing a valuation on a resource in this embodiment may include: an acquiring module 501, a constructing module 502, a first calculating module 503 and a generating module 504. Here, the acquiring module 501 is configured to acquire quotation data of a resource. The constructing module 502 is configured to construct a style index factor of the resource based on the quotation data. The first calculating module 503 is configured to calculate an exposure weight of the style index factor based on the style index factor. The generating module 504 is configured to generate a basic valuation of the resource based on the exposure weight of the style index factor and the quotation data.

In this embodiment, for specific processes of the acquiring module 501, the constructing module 502, the first calculating module 503 and the generating module 504 in the apparatus 500 for performing a valuation on a resource, and their technical effects, reference may be respectively made to the relative descriptions of steps 101-104 in the corresponding embodiment of Fig. 1, and thus the details will not be repeatedly described here.

In some alternative implementations of this embodiment, the apparatus 500 for performing a valuation on a resource further includes: a second calculating module, configured to calculate a mean deviation value between a historical valuation and historical net value of the resource in a historical time period; and a revising module, configured to revise the basic valuation of the resource based on the mean deviation value to obtain a target valuation of the resource.

In some alternative implementations of this embodiment, the quotation data includes historical quotation data. The constructing module 502 is further configured to: calculate, based on historical quotation data in a historical time cycle and historical quotation data in a previous time cycle of the historical time cycle, a rate of return in the historical time cycle.

In some alternative implementations of this embodiment, the first calculating module 503 is further configured to: perform a regression analysis on a rate of return of the resource in the historical time cycle by using a rate of return of the style index factor in the historical time cycle, to obtain the exposure weight of the style index factor.

In some alternative implementations of this embodiment, the quotation data further includes real-time quotation data. The generating module 504 is further configured to: perform a weighted summation on the real-time quotation data by using the exposure weight of the style index factor, to obtain a weighted sum; and adjust the historical quotation data of the resource in the previous time cycle with the weighted sum as a ratio, to obtain the basic valuation of the resource.

In the technical solution of the present disclosure, the collection, storage, use, processing, transmission, provision, disclosure, etc. of the personal information of a user all comply with the provisions of the relevant laws and regulations, and do not violate public order and good customs.

According to an embodiment of the present disclosure, the present disclosure further provides an electronic device, a readable storage medium and a computer program product.

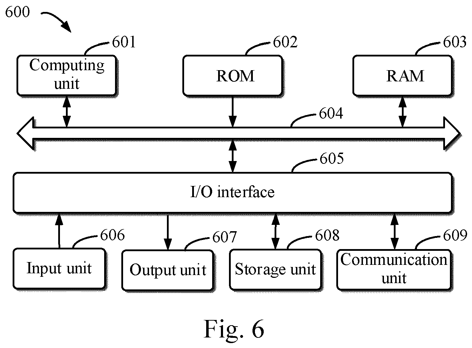

Fig. 6 is a schematic block diagram of an example electronic device 600 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or special-purpose processing assemblies having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for performing a valuation on a resource. For example, in some embodiments, the method for performing a valuation on a resource may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for performing a valuation on a resource may be performed. Alternatively, in other embodiments, the computation unit 601 may be configured to perform the method for performing a valuation on a resource through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

**Claims**

1. A method for performing a valuation on a resource, comprising:

   acquiring (101, 201) quotation data of a resource;
   constructing (102, 202) a style index factor of the resource based on the quotation data;
   calculating (103, 203) an exposure weight of the style index factor based on the style index factor; and
   generating (104, 204) a basic valuation of the resource based on the exposure weight of the style index factor and the quotation data.

2. The method according to claim 1, further comprising:

   calculating (205) a mean deviation value between a historical valuation and historical net value of the resource in a historical time period; and
   revising (206) the basic valuation of the resource based on the mean deviation value to obtain a target valuation of the resource.

3. The method according to claim 1 or 2, wherein the quotation data comprises historical quotation data, and the constructing (102, 202) a style index factor of the resource based on the quotation data comprises:
   calculating (302), based on historical quotation data in a historical time cycle and historical quotation data in a previous time cycle of the historical time cycle, a rate of return in the historical time cycle.

4. The method according to claim 3, wherein the calculating (103, 203) an exposure weight of the style index factor based on the style index factor comprises:
   performing (303) a regression analysis on a rate of return of the resource in the historical time cycle by using a rate of return of the style index factor in the historical time cycle, to obtain the exposure weight of the style index factor.

5. The method according to claim 4, wherein the quotation data further comprises real-time quotation data, and the generating (104, 204) a basic valuation of the resource based on the exposure weight of the style index factor and the quotation data comprises:

   performing (304) a weighted summation on the real-time quotation data by using the exposure weight of the style index factor, to obtain a weighted sum; and
   adjusting (305) the historical quotation data of the resource in the previous time cycle according to the weighted sum, to obtain the basic valuation of the resource.

6. An apparatus for performing a valuation on a resource, comprising:

   an acquiring module (501), configured to acquire quotation data of a resource;
   a constructing module (502), configured to construct a style index factor of the resource based on the quotation data;
a first calculating module (503), configured to calculate an exposure weight of the style index factor based on the style index factor; and
a generating module (504), configured to generate a basic valuation of the resource based on the exposure weight of the style index factor and the quotation data.

7. The apparatus according to claim 6, further comprising:

a second calculating module, configured to calculate a mean deviation value between a historical valuation and historical net value of the resource in a historical time period; and
a revising module, configured to revise the basic valuation of the resource based on the mean deviation value to obtain a target valuation of the resource.

8. The apparatus according to claim 6 or 7, wherein the quotation data comprises historical quotation data, and the constructing module is further configured to:
calculate, based on historical quotation data in a historical time cycle and historical quotation data in a previous time cycle of the historical time cycle, a rate of return in the historical time cycle.

9. The apparatus according to claim 8, wherein the first calculating module is further configured to:
perform a regression analysis on a rate of return of the resource in the historical time cycle by using a rate of return of the style index factor in the historical time cycle, to obtain the exposure weight of the style index factor.

10. The apparatus according to claim 9, wherein the quotation data further comprises real-time quotation data, and the generating module is further configured to:

perform a weighted summation on the real-time quotation data by using the exposure weight of the style index factor, to obtain a weighted sum; and
adjust the historical quotation data of the resource in the previous time cycle with the weighted sum as a ratio, to obtain the basic valuation of the resource.

11. An electronic device, comprising:

at least one processor; and
a storage device that stores instructions that executed by the at least one processor, cause the at least one processor to perform the method according to any one of claims 1-5.

12. A non-transitory computer readable storage medium, storing a computer instruction, wherein the computer instruction is used to cause a computer to perform the method according to any one of claims 1-5.

13. A computer program product, comprising a computer program, wherein the computer program, when executed by a processor, implements the method according to any one of claims 1-5.

<u>100</u>

| Acquiring quotation data of a resource | 101 |

| Constructing a style index factor of the resource based on the quotation data | 102 |

| Calculating an exposure weight of the style index factor based on the style index factor | 103 |

| Generating a basic valuation of the resource based on the exposure weight of the style index factor and the quotation data | 104 |

Fig. 1

200

Acquiring quotation data of a resource — 201

↓

Constructing a style index factor of the resource based on the quotation data — 202

↓

Calculating an exposure weight of the style index factor based on the style index factor — 203

↓

Generating a basic valuation of the resource based on the exposure weight of the style index factor and the quotation data — 204

↓

Calculating a mean deviation between a historical valuation and historical net value of the resource in a preset time period — 205

↓

Revising the basic valuation of the resource based on the mean deviation to obtain a target valuation of the resource — 206

Fig. 2

300

Acquiring historical quotation data and real-time quotation data of a resource — 301

Calculating, based on historical quotation data of a historical time cycle and historical quotation data of a previous time cycle of the historical time cycle, a rate of return in the historical time cycle — 302

performing a regression analysis on the rate of return of the resource in the historical time cycle by using a rate of return of a style index factor in the historical time cycle, to obtain an exposure weight of the style index factor — 303

Performing a weighted summation on the real-time quotation data by using the exposure weight of the style index factor, to obtain a weighted sum — 304

Adjusting the historical quotation data of the previous time cycle of the resource according to the weighted sum, to obtain a basic valuation of the resource — 305

Fig. 3

**Fund intraday valuation**

Fund base database module

Historical quotation module

Style index attribution module

| Fund quotation |
| Style index quotation |

| Style index 1 | Weight 1 |
| ⋮ | ⋮ |
| Style index n | Weight n |

Acquiring fund base information

Acquiring quotation data

Acquiring a factor weight based on an attribution result, and generating a basic valuation

| Style index real-time quotation |

Valuation calculating module

Real-time quotation module

Calculating a valuation deviation

Valuation revising module

Target valuation = Basic valuation + Valuation deviation

**Fig. 4**

500

**Apparatus for evaluating a resource**

Acquiring module — 501

Constructing module — 502

First calculating module — 503

Generating module — 504

**Fig. 5**

600

601
Computing unit

602
ROM

603
RAM

604

605
I/O interface

606
Input unit

607
Output unit

608
Storage unit

609
Communication unit

Fig. 6